# EUROPEAN PATENT SPECIFICATION

(11) **EP 3 519 759 B1**
(45) Date of publication and mention of the grant of the patent: **26.01.2022**
(21) Application number: 17800594.8
(22) Date of filing: 28.09.2017
(51) Int. Cl.: F41G 3/26, G01J 1/04, G09B 9/00, G01V 8/20, F41J 5/02, G01J 1/02

(54) **AN OPTICAL SENSOR**
OPTISCHER SENSOR
CAPTEUR OPTIQUE

(30) Priority: 29.09.2016 IT 201600097814
(43) Date of publication of application: 07.08.2019
(73) Proprietor: LACS S.r.l., 46100 Mantova (MN) (IT)
(72) Inventor: MIAN, Sergio, 31030 Borso del Grappa ( TV) (IT)
(74) Representative: Trentin, Michele
(86) International application number: PCT/IB2017/055953
(87) International publication number: WO 2018/060913

(56) References cited:
- EP-A1- 2 061 092
- WO-A1-81/03066
- WO-A1-86/06844
- WO-A1-2010/006348
- US-A1- 2011 049 388
- US-A1- 2014 186 802
- US-B2- 9 231 144

## Description

### Definitions

In the present invention, electromagnetic beam means any optical beam also in the invisible field.

### Field of application

The present invention is applicable to the tactical gaming or of military event simulation sector and specifically relates to laser tag tactical simulation equipment.

More in detail, the present invention relates to an optical sensor for detecting an electromagnetic beam simulating a bullet in laser tag military tactical simulations.

### State of the art

Both in sporting activities and team games and in the professional field, military and police tactics have been particularly developed and widespread. This scope includes activities called laser tag or laser games, as well as, of course, the training of special forces and armed forces through the use of laser beams instead of bullets.

In all of these situations, an important aspect is the precision and the realism of tactical simulation, not only to ensure the proper running of the game in the ludic case, but above all to ensure a perfect tactical simulation in case of use by military or public security forces.

One of the most important aspects is that the laser beam must simulate a bullet as much as possible, not so much in the range (an aspect which can be easily solved) but rather in the beam size near the lens. In this sense, in fact, the laser beam must be as punctiform as possible to ensure that there are no false positives, that is, shots that would miss the target but which result to be a hit due to the excessive size of the laser beam.

On the other hand, the current optical sensors do not allow to cover all the target, thus an excessively punctiform beam does not guarantee the detection of a hit. Certain sensors, however, are unable to detect excessively punctiform beams even if they are directly hit by them. In other cases, however, the beam hitting the sensor is of low intensity and does not allow its detection.

Consequently, according to the state of the art, it is necessary to tighten and focus the beam as far as possible on the beam and to increase as far as possible the number of applied sensors. However, it is not possible to have a high number of sensors for both economic and practical issues. Consequently, the state-of-the-art beam does not properly simulate a bullet being kept wider to ensure the detection of the hit.

It follows that the drawbacks outlined above are not overcome, but just limited.

Another disadvantage of the known art is the fact that, on some occasions, false positives are found since the beam that hits a target is partly reflected, thus hitting surrounding targets. This often falsifies the outcome of the tactical simulation by making the evaluations uncertain.

Documents EP 2 061 092 A1 is known. It describes a sensor in which there is a laminar body which comprises two channelling layer with interposed one refractive layer. There is also one reflective layer. However the refractive layer is a cavity and the refractive effect is obtained by prismatic features made in the surfaces of the channelling layers.

Documents WO 81/03066 A1 is known, but it describes a sensor made by a spiral moulded optic fiber.

### Presentation of the invention

The object of the present invention is to at least partially overcome the above-noted drawbacks by providing an optical sensor that allows to properly focus the beam in order to consistently simulate a bullet.

Another object is that the optical sensor of the invention allows beam detection when hit by it, even if that beam is substantially punctiform.

A further object of the present invention is to provide an optical sensor that allows to detect hits in most of the lens without determining a substantial increase in costs and without posing any impediment to the user or to the object it is placed on.

Another object is to provide an optical sensor that allows to limit the reflection of its portions in the surrounding area as much as possible, so as to limit or eliminate the problem of false positives.

Another object is that the optical sensor can detect even low intensity electromagnetic beams.

Such objects, as well as others which will become clearer below, are achieved by an optical sensor for the detection of electromagnetic beams simulating bullets according to the following claims, which are to be considered as an integral part of this patent.

In particular, the optical sensor comprises a substantially laminar body which in turn comprises at least one channelling layer configured to convey and retain within electromagnetic beam portions having an incidence angle of less than 90° with respect to the same channelling layer.

There is also at least one layer of refractive material to fragment the electromagnetic beams hitting it and divert such fragments towards the channelling layers with an incidence angle of less than 90°.

One or more electromagnetic beam sensors are then coupled to the channelling layers to detect the channelled electromagnetic beams.

Advantageously, the channelling layers allow to convey the electromagnetic beams by which they are impacted towards the sensors, thereby extending the surface area sensitive to such electromagnetic beams.

Still advantageously, the refractive layer allows to maximize the amount of electromagnetic beam conveyed by the channelling layers since it makes such beams "explode" on multiple angular directions incident to the channelling layers with angles of typically less than 90°.

Still advantageously, the optical sensor of the invention allows to obtain a large area sensitive to the incident electromagnetic beams while using a low number of electromagnetic beam sensors. In fact, still advantageously, the optical sensor of the invention allows to obtain the result just mentioned, even with the use of only one electromagnetic sensor.

Moreover, even advantageously, the channelling layers minimize, or even eliminate, the possibility of outward reflection of portions of beams incident to the sensor, minimizing or even eliminating the possibility of false positives.

According to the invention, the optical sensor also includes at least one reflective layer positioned behind to the laminar body to reflect electromagnetic beam portions that should cross the channel layers and the refractive material layers.

This advantageously allows to maximize the receptivity of the sensor by reducing the losses of incident electromagnetic beam.

### Brief description of the drawings

Further features and advantages of the invention will be more evident in light of the detailed description of some preferred, but not exclusive, embodiments of an optical sensor for the detection of electromagnetic beams simulating bullets in a military tactical simulation according to the invention, illustrated by way of non-limiting example with the aid of the accompanying drawings tables, wherein:
FIG. 1 represents the optical sensor of the invention in a schematic view;
FIG. 2 represents the optical sensor of the invention in an operational configuration of the same;
FIG. 3 is an operational detail of the optical sensor of FIG. 1.

### Detailed description of a preferred embodiment example

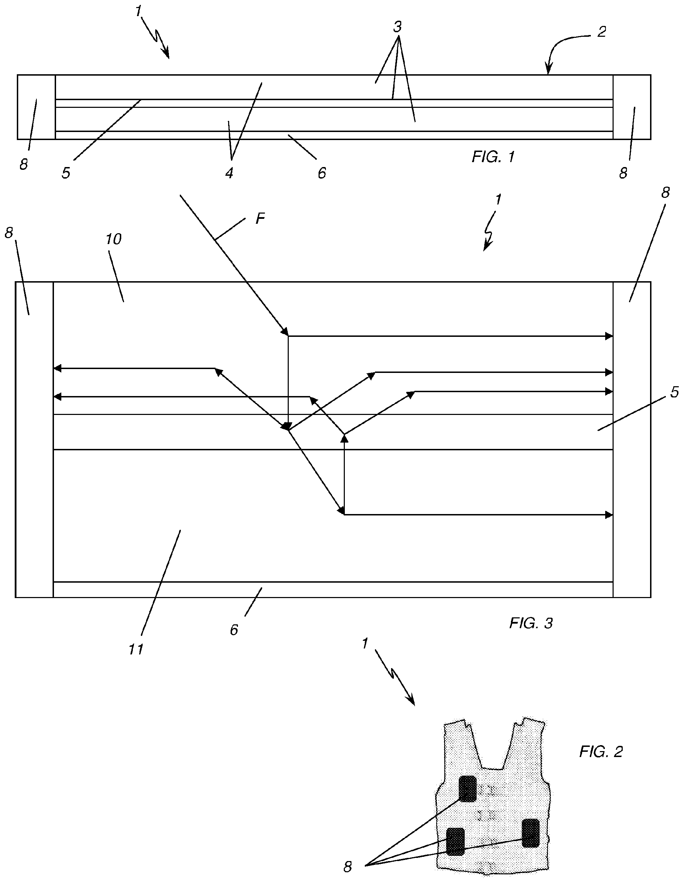

With reference to the mentioned figures, and in particular to Fig. 1, described herein is an optical sensor **1** for detecting electromagnetic beams. Such a sensor is advantageously, but not exclusively, used to perform military tactical simulations as an optical sensor for detecting electromagnetic beams simulating bullets.

The optical sensor **1** has a substantially laminar body **2** which is comprised of multiple layers **3**.

A first of these layers **3** is a channelling layer **4** which is configured to convey and retain within electromagnetic beam portions having an incidence angle to this channelling layer **4** of less than 90 °. In other words, the channelling layer **4** is basically a waveguide for the electromagnetic beams it captures. In this sense, according to some embodiments, the channelling layer comprises glass fibre, whereas according to other embodiments it includes polivinyl chloride.

Advantageously, this layer tends to channel the electromagnetic beams that hit it by minimizing, or even cancelling, their reflection. This minimizes or eliminates false positives on surrounding sensors.

An example of optical sensor **1** according to the invention is shown in Fig. 2 and is constituted by a jacket wearable by the user. It is apparent from this example that, since it is typically appropriate that the optical sensor **1** of the invention is particularly extended and flexible, generally the channelling layer **4** is a membrane, but this should not be considered as limiting for different embodiments of the invention wherein, for example, the channelling layer is a rigid layer or is different from a sheet-like layer.

According to the invention, one of the layers **3** is made of a refractive material layer **5** whose purpose is to fragment the electromagnetic beams that hit it and divert such fragments to the channelling layers with an incidence angle of less than 90° so that they can capture them.

To this end, the refractive layer **5** is typically made up of plastic material, but even this feature should not be considered as limiting for the present invention. According to an embodiment variant not shown in the figures, for example, this refractive layer is made up of a special paint applied on a wall of a channelling layer.

Advantageously, the refractive layer **5** maximizes the electromagnetic beam portions that are captured by the channelling layer **4**.

However, in the presence of particularly punctiform beams would pose the risk that they would not be properly captured by the channelling layer **4**. Advantageously, the refractive layer obviates to such circumstance by fragmenting such punctiform beam so that it is easily conveyed by the channelling layer **4**.

According to the invention, the optical sensor **1** also includes a reflective layer **6** positioned on the rear side of the laminar body **2** to reflect electromagnetic beam portions that may surpass the channelling layer **4** and the reflective material layer **5**.

This advantageously allows to maximize the receptivity of sensor **1** by reducing the incident electromagnetic beam losses.

According to the invention, the optical sensor **1** also obviously includes electromagnetic beam sensors **8** coupled to the channelling layers **4** to receive their electromagnetic beams.

The position of such electromagnetic beam sensors **8** can advantageously be avoided since the channelling layers **4** handle the channelling of captured electromagnetic beams. Further, the figure shows that, in the represented embodiment, the electromagnetic beam sensors **8** are two, but also this feature should not be considered as limiting for the invention since the number of such sensors can be any.

However, advantageously, it is noted that the optical sensor **1** of the invention may be extended as desired by increasing the active surface of electromagnetic beam detection without the need to increase the number of sensors of such beams.

Still advantageously, the risk of false negatives is substantially cancelled since the entire surface of interest can be covered by the optical sensor **1** of the invention, ensuring the capture of any beam hitting it.

However, the above-mentioned optical sensor **1** of the invention can be made of flexible materials, making it easy and convenient to use even in case of large size.

From Fig. 1 it is noted that, according to the embodiment of the invention, the optical sensor **1** is composed of a refractive layer **5** interposed between two channelling layers **4** and has a single reflective layer **6**. This embodiment allows to obtain more benefits.

Operably, in fact, the electromagnetic beam **F**, as seen in the detail of Fig. 3, affects the first **10** of the two channelling layers **4**. Typically, at least part of it is captured and conveyed to the electromagnetic beam sensors **8**.

If electromagnetic beam portions are able to pass the first channel layer **10**, they affect the refractive layer **5** which fragments them by deviating it again towards the first channelling layer **10**.

However, it may happen that some portions of the electromagnetic beam can also cross the refractive layer **5** or that the latter cannot divert them in the direction of the first channelling layer **10**. In such a case, these portions affect the second channelling layer **11** which captures and conveys them to the electromagnetic beam sensors **8**.

Likewise, it may happen that some portions of the electromagnetic beam can also cross the second channelling layer **11**. In such a case, these portions affect the reflective layer **6** and are reflected towards the channelling layer **4** and refractive layer **5**.

There is also the case that some portions of the electromagnetic beam bounce on the second channelling layer **11**. In this case, they still undergo the effect of the refractive layer **5** being again fragmented and captured or from the first **10** or the second channelling layer **11**. Likewise, if some of the portions of the electromagnetic beam incident to the optical sensor **1** and which have passed the first channelling layer **10** bounce on the refractive layer **5**, they will either be captured from the first channelling layer **10** or bounced back to the reflective layer **5** or toward the second channelling layer **11**.

In other words, advantageously, the two channelling layers **4** realize an overall waveguide within which either the electromagnetic beam is immediately captured, or its fragments bounce until they are captured. It is deduced, advantageously, that the loss of beam portions (and therefore of captured energy) is substantially cancelled by the crossing of the optical sensor **1** as well as the possible outward reflections of beam portions with the risk of false positives in the surrounding environment. The losses on the rear side of sensor **1**, however, are completely cancelled by the reflective layer **6**.

However, such an embodiment should not be considered as limiting for the invention. In fact, the number of refractive layers and channelling layers can be any. In this respect, according to two different embodiment variants not represented herein, there is only one refractive layer and one channelling layer. In the first case, there is only the first channelling layer pointing to the fact that the refractive layer is designed in order to prevent electromagnetic beam portions from crossing it and if so, there is the presence of the reflective layer. In the second case not being within the scope of the claims there is only the second channelling layer pointing to the fact that the materials and constructive devices used are such as to limit, or even eliminate, the possibility of front reflection of electromagnetic beam portions towards the surrounding area.

Having said the above, it is clear that the optical sensor of the invention achieves all the intended objectives.

Specifically, it allows to properly focus the beam in order to consistently simulate a bullet, as even punctiform beams are definitely detectable if they are incident to the lens.

The optical sensor also allows to detect hits even in the entire surface of the lens without there being a substantial increase in costs and without posing any impediment to the user or to the object it is placed on, since it is not necessary to increase the electromagnetic beam sensors used.

As already seen, however, the optical sensor of the invention allows to limit as much as possible the reflection of its portions in the surrounding area to limit or eliminate the problem of false positives. The so-shaped sensor also maximizes its receptivity even for low-intensity incident beams.

## Claims

1. An optical sensor configured for detecting electromagnetic beams (**F**) simulating bullets in a military tactical simulation, said optical sensor (**1**) having a substantially laminar body (**2**) having a front side and a rear side,
said substantially laminar body (**2**) comprising some overlapping layers, said layers comprising:
- at least one channelling layer (**4**) configured to convey and retain within electromagnetic beam (**F**) portions having an incidence angle to said channelling layer (**4**) of less than 90°;
- at least one refractive material layer (**5**) configured for fragmenting the electromagnetic beams (**F**) that hit it and divert said fragments to said at least one channelling layer (**4**) with an incidence angle of less than 90°;
- at least one reflective layer (**6**) arranged on the rear side of said laminar body (**2**) to reflect electromagnetic beam (**F**) portions, that should cross said at least one channelling layer (**4**) and said at least one refractive material layer (**5**), towards said at least one channelling layer (**4**) and said at least one refractive material layer (**5**);
- at least one electromagnetic beam sensor (**8**) coupled to said at least one channelling layer (**4**) to receive its channelled electromagnetic beam portions,
said optical sensor (**1**) being **characterized in that** at least one first (**10**) of said at least one channelling layer (**4**) is disposed on the front side of the laminar body (**2**) and interposed between said refractive layer (**5**) and a source area of the electromagnetic beams (**F**).

2. Optical sensor according to claim 1, **characterized in that** said refractive layer (**5**) is interposed between the source area of the electromagnetic beams (**F**) and at least one second (**11**) of said at least one channelling layer (**4**).

3. Optical sensor according to claim 1 or 2, **characterized in that** said refractive layer (**5**) is made of plastic material.

4. Optical sensor according to claim 1 or 2, **characterized in that** said refractive layer is made of a refractive paint layer.

5. Optical sensor according to any one of the preceding claims, **characterized in that** said at least one channelling layer is a membrane.

6. Optical sensor according to any one of the preceding claims, **characterized in that** said at least one channelling layer (**4**) comprises glass fibre.

7. Optical sensor according to any one of the preceding claims, **characterized in that** said at least one channelling layer comprises polyvinyl chloride.

## Patentansprüche

1. Optischer Sensor, welcher dafür ausgelegt ist, elektromagnetische Strahlen (**F**) zu erfassen, die Geschosse in einer militärischen taktischen Simulation simulieren, wobei der optische Sensor (**1**) einen im Wesentlichen geschichteten Körper (**2**) mit einer Vorderseite und einer Rückseite aufweist,
wobei der im Wesentlichen geschichtete Körper (**2**) einige sich überlagernde Schichten umfasst, wobei die Schichten umfassen:
- wenigstens eine Kanalisierungsschicht (**4**), die dafür ausgelegt ist, Abschnitte elektromagnetischer Strahlen (**F**), die einen Einfallswinkel auf die Kanalisierungsschicht (**4**) von weniger als 90° aufweisen, zu leiten und in sich zu halten;
- wenigstens eine Schicht aus lichtbrechendem Material (**5**), die dafür ausgelegt ist, die elektromagnetischen Strahlen (**F**), die auf sie auftreffen, zu fragmentieren und die Fragmente zu der wenigstens einen Kanalisierungsschicht (**4**) mit einem Einfallswinkel von weniger als 90° abzulenken;
- wenigstens eine reflektierende Schicht (**6**), die auf der Rückseite des geschichteten Körpers (**2**) angeordnet ist, um Abschnitte elektromagnetischer Strahlen (**F**), welche die wenigstens eine Kanalisierungsschicht (**4**) und die wenigstens eine Schicht aus lichtbrechendem Material (**5**) durchqueren sollten, in Richtung der wenigstens einen Kanalisierungsschicht (**4**) und der wenigstens einen Schicht aus lichtbrechendem Material (**5**) zu reflektieren,
- wenigstens einen Sensor für elektromagnetische Strahlung (**8**), der mit der wenigstens einen Kanalisierungsschicht (**4**) gekoppelt ist, um deren kanalisierte Abschnitte elektromagnetischer Strahlen zu empfangen,
wobei der optische Sensor (**1**) **dadurch gekennzeichnet ist, dass** wenigstens eine erste (**10**) der wenigstens einen Kanalisierungsschicht (**4**) auf der Vorderseite des geschichteten Körpers (**2**) angeordnet ist und zwischen der lichtbrechenden Schicht (**5**) und einem Quellbereich der elektromagnetischen Strahlen (**F**) angeordnet ist.

2. Optischer Sensor nach Anspruch 1, **dadurch gekennzeichnet, dass** die lichtbrechende Schicht (5) zwischen dem Quellbereich der elektromagnetischen Strahlen (**F**) und wenigstens einer zweiten (**11**) der wenigstens einen Kanalisierungsschicht angeordnet ist.

3. Optischer Sensor nach Anspruch 1 oder 2, **dadurch gekennzeichnet, dass** die lichtbrechende Schicht (5) aus Kunststoffmaterial hergestellt ist.

4. Optischer Sensor nach Anspruch 1 oder 2, **dadurch gekennzeichnet, dass** die lichtbrechende Schicht aus einer lichtbrechenden Farbschicht hergestellt ist.

5. Optischer Sensor nach einem der vorhergehenden Ansprüche, **dadurch gekennzeichnet, dass** die wenigstens eine Kanalisierungsschicht eine Membran ist.

6. Optischer Sensor nach einem der vorhergehenden Ansprüche, **dadurch gekennzeichnet, dass** die wenigstens eine Kanalisierungsschicht (**4**) Glasfasern umfasst.

7. Optischer Sensor nach einem der vorhergehenden Ansprüche, **dadurch gekennzeichnet, dass** die wenigstens eine Kanalisierungsschicht Polyvinylchlorid umfasst.

## Revendications

1. Capteur optique configuré pour détecter des faisceaux électromagnétiques (**F**) simulant des balles dans une simulation tactique militaire, ledit capteur optique (**1**) présentant un corps (2) sensiblement laminaire présentant une face avant et une face arrière,
ledit corps (**2**) sensiblement laminaire comprenant des couches qui se chevauchent, lesdites couches comprenant :
- au moins une couche de canalisation (**4**) configurée pour transporter et retenir à l'intérieur des parties de faisceau électromagnétique (**F**) présentant un angle d'incidence par rapport à ladite couche de canalisation (**4**) inférieur à 90° ;
- au moins une couche de matériau de réfraction (**5**) configurée pour fragmenter les faisceaux électromagnétiques (**F**) qui la frappent et dévier lesdits fragments vers ladite au moins une couche de canalisation (**4**) avec un angle d'incidence inférieur à 90° ;
- au moins une couche réfléchissante (**6**) agencée sur la face arrière dudit corps (**2**) laminaire pour réfléchir des parties de faisceau électromagnétique (**F**), qui doivent traverser ladite au moins une couche de canalisation (**4**) et ladite au moins une couche de matériau de réfraction (**5**), vers ladite au moins une couche de canalisation (**4**) et ladite au moins une couche de matériau de réfraction (**5**) ;
- au moins un capteur de faisceau électromagnétique (**8**) couplé à ladite au moins une couche de canalisation (**4**) pour recevoir ses parties de faisceau électromagnétique canalisées,
ledit capteur optique (**1**) étant **caractérisé en ce qu'**au moins une première (**10**) de ladite au moins une couche de canalisation (**4**) est disposée sur la face avant du corps (2) laminaire et intercalée entre ladite couche de réfraction (**5**) et une zone de source des faisceaux électromagnétiques (**F**).

2. Capteur optique selon la revendication 1, **caractérisé en ce que** ladite couche de réfraction (**5**) est intercalée entre la zone de source des faisceaux électromagnétiques (**F**) et au moins une seconde (**11**) de ladite au moins une couche de canalisation (**4**).

3. Capteur optique selon la revendication 1 ou 2, **caractérisé en ce que** ladite couche de réfraction (5) est faite d'une matière plastique.

4. Capteur optique selon la revendication 1 ou 2, **caractérisé en ce que** ladite couche de réfraction est faite d'une couche de peinture de réfraction.

5. Capteur optique selon l'une quelconque des revendications précédentes, **caractérisé en ce que** ladite au moins une couche de canalisation est une membrane.

6. Capteur optique selon l'une quelconque des revendications précédentes, **caractérisé en ce que** ladite au moins une couche de canalisation (**4**) comprend une fibre de verre.

7. Capteur optique selon l'une quelconque des revendications précédentes, **caractérisé en ce que** ladite au moins une couche de canalisation comprend un polychlorure de vinyle.
